# EUROPÄISCHE PATENTSCHRIFT

(11) **EP 1 695 909 B1**
(45) Veröffentlichungstag und Bekanntmachung des Hinweises auf die Patenterteilung: **07.11.2007**
(21) Anmeldenummer: 05027139.4
(22) Anmeldetag: 13.12.2005
(51) Int. Cl.: B64D 11/06

(54) **Fahrgastsitz, insbesondere Fluggastsitz**
Passenger seat, particularly for a plane
Siège pour passager, en particulier pour un avion

(30) Priorität: 26.02.2005 DE 102005008895
(43) Veröffentlichungstag der Anmeldung: 30.08.2006
(73) Patentinhaber: Recaro Aircraft Seating GmbH & Co. KG, 74523 Schwäbisch Hall (DE)
(72) Erfinder: Baumann, Jürgen, 78351 Ludwigshafen (DE)
(74) Vertreter: Bartels & Partner

(56) Entgegenhaltungen:
- DE-A1- 4 039 100
- DE-B- 1 134 803
- US-A- 4 787 675
- US-A- 5 352 020
- US-A- 5 765 803

## Beschreibung

Die Erfindung bezieht sich auf einen Fahrgastsitz, insbesondere Fluggastsitz, mit Sitzkomponenten wie Sitzträger, Sitzteil, Rückenlehne und Armstütze, von denen zumindest eine Sitzkomponente relativ zu anderen Sitzkomponenten in wählbare Positionen lageeinstellbar und in diesen mittels einer steuerbaren Feststelleinrichtung festlegbar ist gemäß der Merkmalsausgestaltung des Oberbegriffes des Patentanspruches 1.

Bekannte Fahrgastsitze dieser Art finden in Verkehrsmitteln für die Personenbeförderung verbreitete Anwendung, beispielsweise bei Omnibussen, Fährschiffen und insbesondere Luftfahrzeugen der gewerblichen Luftfahrt. Da sich bei der Benutzung derartiger Sitze ausgedehnte Reisezeiten ergeben können, wie dies insbesondere bei Langstreckenflügen der Fall ist, stellt die Möglichkeit, eine Lage- oder Positionseinstellung von Sitzkomponenten vornehmen zu können, ein wesentliches Merkmal im Hinblick auf die Verbesserung des dem Sitzbenutzer gebotenen Komforts dar. Der Sitzbenutzer wird dadurch in die Lage versetzt, betreffende Sitzkomponenten aus einer Standard- oder Sicherheitsposition, wie sie beispielsweise bei Luftfahrzeugen für Betriebsphasen des Rollens, des Startens und des Landens vorgeschrieben sind, in jeweils von ihm gewünschte Einstellpositionen zu bringen, die dem Sitzbenutzer, seinen Bedürfnissen entsprechend, größtmögliche Bequemlichkeit bieten, beispielsweise bei einer vom Sitzbenutzer eingenommenen Ruhe- oder Schlafposition.

Durch die DE 40 39 100 A ist ein Fahrzeugsitz, insbesondere für Flugzeuge und Omnibusse, bekannt. Bei dem dahingehend bekannten Sitz mit einem um eine Querachse in seiner Neigungslage einstellbaren Sitzteil-Polsterträger und einer am vorderen Endabschnitt des Sitzteil-Polsterträgers angelenkten Beinstütze wird eine Antriebsvorrichtung zum Einstellen der Beinstütze von einem Schlitten getragen, der in einer mit der Sitzstruktur verbundenen Schlittenführung relativ zur Sitzstruktur verschiebbar ist. Dank des relativ zur Sitzstruktur verschiebbaren Schlittens für den der Beinstütze zugeordneten Einstellantrieb nebst Nachführeinrichtung, erfolgt automatisch eine Verkleinerung des Winkels, um den die Beinstütze aus ihrer Bereitschaftsstellung herausgeschwenkt ist, wenn das vordere Ende des Sitzteil-Polsterträgers zur Verminderung der Neigungslage abgesenkt wird. Hierdurch wird zur Verbesserung des Komforts die Beinstütze gegen ihre Gebrauchslage hin geschwenkt, wodurch sich das Gefälle vergrößert, das ihre Auflagefläche gegen das vordere Ende des Sitzes hin hat.

Durch die US 5,765,803 A ist ein gattungsgemäßer Fahrgastsitz, insbesondere Fluggastsitz, bekannt mit Sitzkomponenten, wie Sitzträger, Sitzteil, Rückenlehne und Armstütze, von denen zumindest eine Sitzkomponente in Form der Rückenlehne relativ zu den anderen Sitzkomponenten in Form des Sitzteils in wählbare Positionen lageeinstellbar und in diesen mittels einer steuerbaren Feststelleinrichtung festlegbar ist, wobei der Sitzboden relativ zum Sitzträger um zwei miteinander einen Winkel bildende Schwenkachsen schwenkbar angeordnet ist. Im Bereich der Rückenlehne ist bei der bekannten Lösung unterhalb des Sitzbodens und zwischen diesem und dem Sitzträger randseitig jeweils eine Druckfederanordnung vorhanden, die mit einem Dämpfer in der Art fluidischer Arbeitszylinder zusammenwirkt, die mit ihrem jeweiligen Stangenende im rückwärtigen Bereich der Rückenlehne angreifen sowie mit ihrem Gehäuseende gelenkig am Sitzträger festgelegt sind. Im Bereich des vorderen Endes des bekannten Sitzes ist wiederum zwischen Sitzboden und Sitzträger mittig ein feststehendes Gelenk angeordnet, so dass dergestalt eine Schwenkachse in Sitzlängsrichtung gebildet ist und eine Schwenkachse in dazu verlaufender Querrichtung. Ferner ist die in Sitzquerrichtung verlaufende Schwenkachse zu der Längsachse des Sitzträgers rechtwinklig ausgerichtet, der sich bezogen auf die Einbaulage des Sitzbodens in paralleler Richtung zu diesem erstreckt. Zur Komforterhöhung ist es mithin mit der bekannten Lösung möglich, das Sitzteil in Abhängigkeit der einwirkenden Beschleunigungs- und Sitzkörperkräfte in dämpfender Weise in zwei zueinander senkrechten Richtungen ständig zu schwenken. Bei einem etwaigen Crashfall läßt jedoch die bekannte Lösung die notwendige Sicherheit vermissen und im übrigen ist der Sitzbenutzer durch die bekannte Federdämpferanordnung laufend in Bewegung gehalten, so dass ein entspanntes Ruhen, wie man es beispielsweise auf Langstreckenflügen wünscht, nicht möglich ist.

Ausgehend von diesem Stand der Technik stellt sich die Erfindung die Aufgabe, einen Fahrgastsitz zur Verfügung zu stellen, der dem Sitzbenutzer Einstellmöglichkeiten zur Verfügung stellt, die gegenüber den bekannten Lösungen in besonders hohen Maße zur Verbesserung des Sitzkomforts beitragen.

Erfindungsgemäß ist diese Aufgabe durch einen Fahrgastsitz, insbesondere Fluggastsitz, gelöst, der die Merkmale des Patentanspruchs 1 in seiner Gesamtheit aufweist.

Dadurch, dass gemäß dem kennzeichnenden Teil des Patentanspruches 1 die Feststelleinrichtung mindestens ein vom Sitzbenutzer steuerbares Hydro-Lock-Element für wahlweises Sperren und Freigeben der Gelenkbeweglichkeit der Gelenkanordnung aufweist, läßt sich die Neigung des Sitzteils als einer für den Sitzkomfort besonders bedeutsamen Sitzkomponente so einstellen, dass sie den jeweiligen Bedürfnissen des Sitzbenutzers optimal angepaßt ist. So kann beispielsweise für eine zurückgelehnte Ruhe- oder Schlafposition bei gegebenenfalls vorhandener, in angehobener Stellung befindlicher Beinauflage und nach hinten geschwenkter Rückenlehne eine Verstellung der Neigung des Sitzbodens um eine zur Sitzlängsrichtung quer verlaufende Schwenkachse besonders Komfort erhöhend sein. Vorzugsweise sind dabei die angesprochenen Schwenkachsen zueinander senkrecht verlaufend angeordnet. Die Gelenkanordnung, mit der der Sitzboden mit dem Sitzträger verbunden ist, kann in der Art eines Kardangelenkes ausgebildet sein, so dass der Sitzboden um zwei zueinander senkrechte Schwenkachsen schwenkbar ist, wobei der Sitzboden beispielsweise nach vorne und nach hinten sowie nach links und nach rechts neigbar ist und sich diese Neigungen jeweils überlagern können.

Anstatt in der Art eines Kardangelenkes kann die Gelenkanordnung in alternativer Bauweise zwei zwischen Sitzboden und Sitzträger befindliche Gelenkstellen aufweisen, die zur Festlegung einer in Sitzlängsrichtung verlaufenden Schwenkachse in der Sitzlängsrichtung zueinander versetzt sind, wobei zur Bildung einer in Sitzquerrichtung verlaufenden weiteren Schwenkachse eine der Gelenkstellen in Art eines Kugelgelenkes und die andere Gelenkstelle als eine Schwenk- und Verschiebebewegung ermöglichendes Schlitz/Zapfengelenk ausgebildet sind.

Bei einem vorteilhaften Ausführungsbeispiel ist die in der Art eines Kugelgelenkes ausgebildete Gelenkstelle zwischen rückwärtigen Bereichen von Sitzträger und Sitzboden angeordnet, und das Schlitz/Zapfen-Gelenk befindet sich an einem demgegenüber weiter vorn am Sitzboden befindlichen Gelenkträger. Dieser Gelenkträger kann Arme aufweisen, die sich zu beiden Seiten der in Sitzlängsrichtung verlaufenden Schwenkachse quer zu dieser entlang des Sitzbodens erstrecken, und zwischen Sitzträger und den Enden der Arme des Gelenkträgers können Hydro-Lock-Elemente der Feststelleinrichtung eingesetzt sein, die am Schlitz/Zapfen-Gelenk sowohl eine Verschiebe- als auch eine Schwenkbewegung in Einstellpositionen und die Verriegelung in diesen Einstellpositionen ermöglichen. Bei dieser Gestaltung erfüllen die Hydro-Lock-Elemente nicht nur eine Verriegelungsfunktion bezüglich der Schwenkbewegung um die in Sitzlängsrichtung verlaufende Schwenkachse, sondern bilden in Doppelfunktion auch die Abstützelemente für den vorderen Bereich des Sitzbodens, wobei die Länge der Abstützelemente die Neigung des Sitzbodens um die in Sitzquerrichtung verlaufende Schwenkachse definiert.

Nachstehend ist die Erfindung anhand von in der Zeichnung dargestellten Ausführungsbeispielen im einzelnen erläutert. Es zeigen:
- Fig. 1 eine stark schematisch vereinfacht und perspektivisch gezeichnete Schrägansicht eines Ausführungsbeispieles des erfindungsgemäßen Fahrgastsitzes in Form eines Fluggastsitzes;
- Fig. 2 eine stark schematisierte, perspektivische Teildarstellung in Form einer Durchsichtsskizze zur Verdeutlichung der kardanischen Lagerung des Sitzbodens des Ausführungsbeispieles von Fig. 1;
- Fig. 3 eine perspektivische, von unten gesehene Schrägansicht nur des Bereiches von Sitzboden und Sitzträger eines zweiten Ausführungsbeispieles der Erfindung und
- Fig. 4 einen Längsschnitt des in Fig. 3 Gezeigten, entsprechend der dort mit IV-IV angedeuteten Schnittlinie.

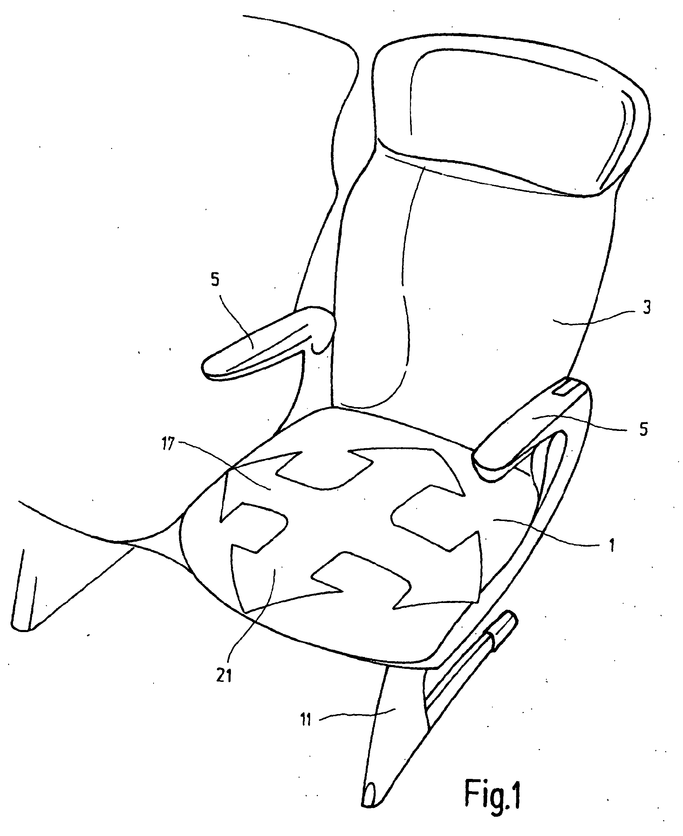

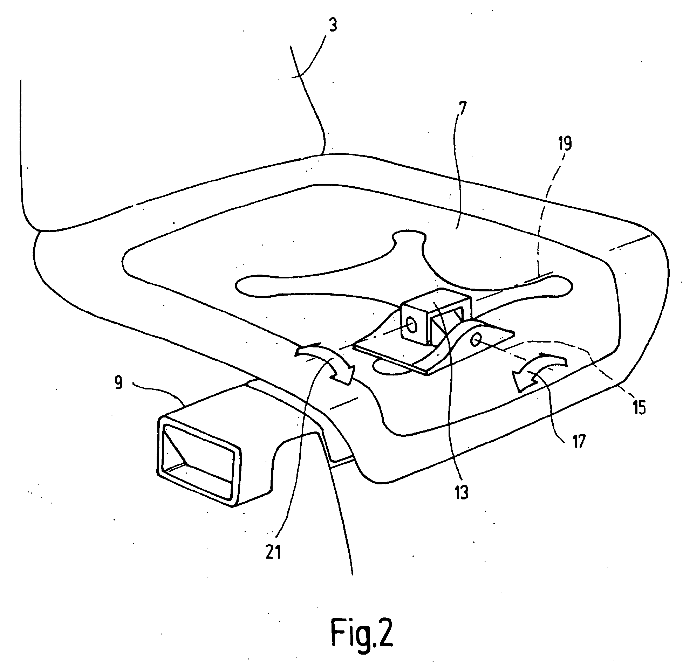

Fig. 1 zeigt in schematischer Darstellung einen Fluggastsitz mit einem Sitzteil 1, einer Rückenlehne 3 und seitlichen Armstützen 5. Der als Trägerelement für den Sitzteil 1 dienende Sitzboden in Form einer Sitzschale oder -wanne, der in Fig. 1 nicht sichtbar ist, ist in Fig. 2 mit 7 bezeichnet. Der Sitzboden 7 ist auf einem in Sitzquerrichtung verlaufenden Sitzträger 9 gelagert, der über ein Fußgestell 11 auf einem betreffenden Kabinenboden aufgeständert ist.

Entsprechend der schematischen Darstellung von Fig. 2 ist der Sitzboden 7 am Sitzträger 9 kardanisch über ein Kardangelenk 13 gelagert, so dass der Sitzboden 7 um eine in Sitzlängsrichtung verlaufende Schwenkachse 15 nach beiden Seiten entsprechend dem Doppelpfeil 17 neigbar und um eine in Sitzquerrichtung verlaufende, zur Achse 15 senkrechte Schwenkachse 19 nach vorn und nach hinten neigbar ist, entsprechend dem Doppelpfeil 21. Bei dem vorliegenden Beispiel kann der Schwenkbereich jeweils plus minus 10° gegenüber der Normalstellung betragen. Eine Feststelleinrichtung, die beispielsweise ein vom Sitzbenutzer wahlweise entriegelbares Hydro-Lock-Element aufweisen kann, das zwischen Sitzboden 7 und Sitzträger 9 oder zwischen Sitzboden 7 und einem anderen Strukturelement des Sitzes eingefügt ist, ist in Fig. 1 und 2 der Einfachheit halber nicht eingezeichnet. Die Bezeichnung "Hydro-Lock-Element" bezieht sich auf handelsübliche hydromechanische Sperrzylinder, die durch Ventilbetätigung entsperrbar sind.

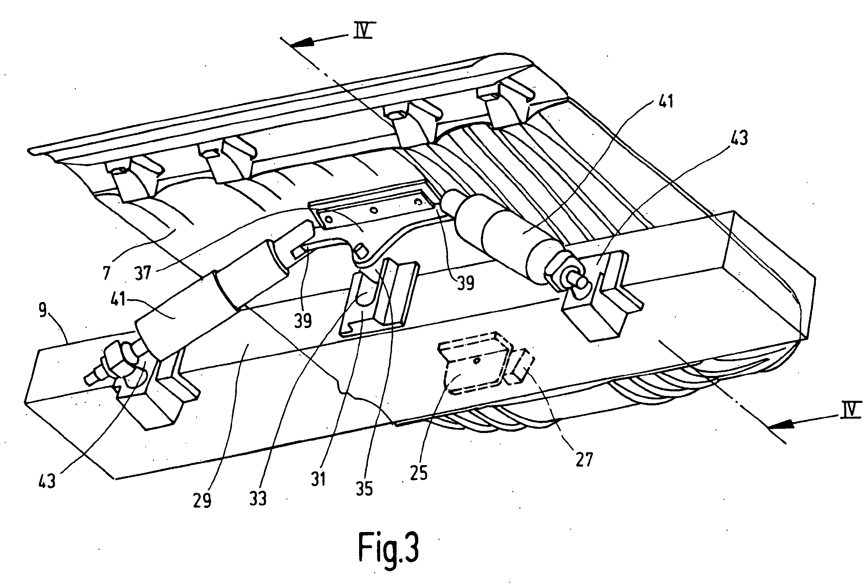

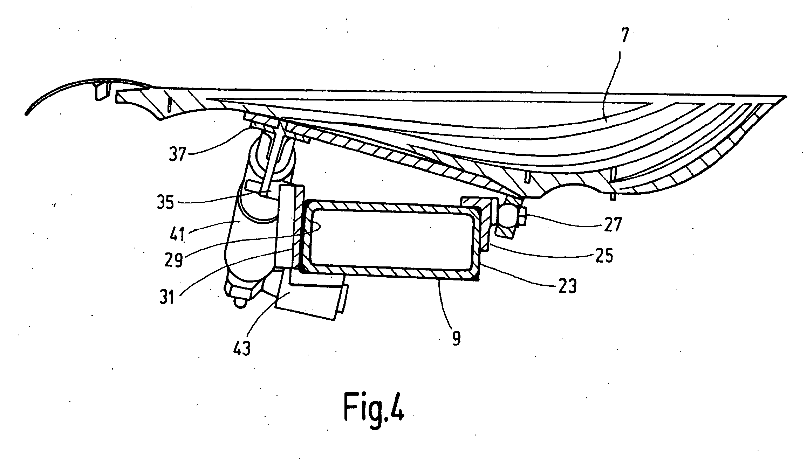

Die Fig. 3 und 4 zeigen ein abgewandeltes Beispiel, bei dem anstelle eines Kardangelenkes 13 eine anders aufgebaute Gelenkanordnung zwischen Sitzträger 9 und Sitzboden 7 vorgesehen ist. Wie bei dem ersten Ausführungsbeispiel ist der Sitzträger 9 ein in Sitzquerrichtung verlaufender Träger mit Hohlkastenprofil, an dessem hinterem Ende 23 ein Winkelstück 25 befestigt ist, das als Lagerbock für eine kugelgelenkartige Gelenkstelle 27 dient, die sich an der Unterseite des Sitzbodens 7 in dessen rückwärtigem Bereich befindet. Vorzugsweise ist die kugelgelenkartige Gelenkstelle 27 in der Art einer Gummilagerung oder einer Lagerung mit einer andersartigen elastomeren Lagerpackung ausgebildet. In jedem Falle ermöglicht die kugelgelenkartige Gelenkstelle 27 eine Neigung des Sitzbodens 7 sowohl um die in Sitzlängsrichtung verlaufende Schwenkachse 15 als auch um die in Sitzquerrichtung verlaufende Schwenkachse 19, wobei die Gelenkstelle 27 die in Sitzquerrichtung verlaufende Schwenkachse definiert.

Am vorderen Ende 29 des Sitzträgers 9 ist, in Sitzlängsrichtung mit der Gelenkstelle 27 fluchtend, eine Verschiebeführung 31 befestigt, die einen oben offenen Führungsschlitz 33 aufweist. In diesem Führungsschlitz 33 ist ein Führungszapfen 35 verschiebbar geführt, und zwar bei einer Schwenkbewegung des Sitzbodens 7 um die durch die Gelenkstelle 27 definierte, in Sitzquerrichtung verlaufende Schwenkachse. Dieser in der Führung 33 geführte Zapfen 35 ist an einem Gelenkträger 37 befestigt, der im vorderen Bereich des Sitzbodens 7 mit dessen Unterseite verbunden ist. Der Gelenkträger 37 weist zwei zu beiden Seiten des Führungszapfens 35 in Sitzquerrichtung auskragende Arme 39 auf. Jeder der Arme 39 ist an seinem Ende gelenkig mit der Kolbenstange eines Hydro-Lock-Elementes 41 verbunden, das mit seinem entgegengesetzten Zylinderende an einem zugehörigen Lagerbock 43 gelagert ist. Diese Lagerböcke 43 befinden sich am vorderen Ende 29 des Sitzträgers 9, gegenüber der Verschiebeführung 31 nach beiden Seiten nach außen versetzt, in etwa unterhalb des zugeordneten Seitenrandes des Sitzbodens 7.

Die vom Sitzbenutzer steuerbaren Hydro-Lock-Elemente 41 bilden zwischen Sitzboden 7 und Sitzträger 9 schräg verlaufende Abstützelemente, deren wirksame Länge die Neigung des Sitzbodens 7 um die durch die Gelenkstelle 27 definierte, in Sitzquerrichtung verlaufende Schwenkachse 19 bestimmt, wobei sich bei ausgefahrener Länge der Hydro-Lock-Elemente 41 eine Neigung des Sitzbodens 7 nach hinten oder bei verkürzter Länge der Elemente 41 eine Neigung des Sitzbodens 7 nach vorn einstellt. Wenn die Hydro-Lock-Elemente 41 ungleich weit ausgefahren sind, ergibt sich eine entsprechende Neigung des Sitzbodens 7 um die in Sitzlängsrichtung verlaufende Schwenkachse 15, die durch den Zapfen 35 in der Führung 33 definiert ist. Bei in Sperrstellung befindlichen Hydro-Lock-Elementen 41 ist der Sitzboden 7 in der jeweils eingenommenen Einstellage verriegelt.

Die sich bei ungleich weit ausgefahrenen Hydro-Lock-Elementen 41 ergebende Seitenneigung des Sitzbodens 7 ermöglicht zusammen mit einer entsprechend gewählten Neigung des Sitzbodens 7 nach vorn oder hinten eine besonders bequeme Sitzposition des in einer Seitenschlaf-Position befindlichen Sitzbenutzers, indem Becken- und Hüftpartie optimal abgestützt sind. Ein nach vorn geneigter Sitzboden 7 ermöglicht einen besonders hohen Sitzkomfort bei einer verhältnismäßig gestreckten Ruhelage des Sitzbenutzers.

## Patentansprüche

1. Fahrgastsitz, insbesondere Fluggastsitz, mit Sitzkomponenten wie Sitzträger (9), Sitzteil (1), Rückenlehne (3) und Armstütze (5), von denen zumindest eine Sitzkomponente relativ zu anderen Sitzkomponenten in wählbare Positionen lageeinstellbar und in diesen mittels einer steuerbaren Feststelleinrichtung (41) festlegbar ist, wobei der Sitzboden (7) des Sitzteiles (1) relativ zum Sitzträger (9) um zwei miteinander einen Winkel bildende Schwenkachsen (15, 19) schwenkbar angeordnet ist und wobei der Sitzboden (7) mit dem Sitzträger (9) über eine Gelenkanordnung (13;27,33,35) verbunden ist, **dadurch gekennzeichnet, dass** die Feststelleinrichtung mindestens ein vom Sitzbenutzer steuerbares Hydro-Lock-Element (41) für wahlweises Sperren und Freigeben der Gelenkbeweglichkeit der Gelenkanordnung (13;27,33,35) aufweist.

2. Fahrgastsitz nach Anspruch 1, **dadurch gekennzeichnet, dass** die Schwenkachsen (15, 19) jeweils zueinander senkrecht verlaufen.

3. Fahrgastsitz nach Anspruch 2, **dadurch gekennzeichnet, dass** eine Schwenkachse (15) in Sitzlängsrichtung und eine Schwenkachse (19) in Sitzquerrichtung verläuft.

4. Fahrgastsitz nach Anspruch 3, **dadurch gekennzeichnet, dass** die in Sitzquerrichtung verlaufende Schwenkachse (19) zu der Achse des Sitzträgers (9) parallel ist, der sich, bezogen auf die Einbaulage des Sitzes, in horizontaler Richtung erstreckt.

5. Fahrgastsitz nach einem der Ansprüche 1 bis 4, **dadurch gekennzeichnet, dass** die Gelenkanordnung zwei zwischen Sitzboden (7) und Sitzträger (9) befindliche Gelenkstellen (27, 33, 35) aufweist, die zur Festlegung einer in Sitzlängsrichtung verlaufenden Schwenkachse (15) in der Sitzlängsrichtung zueinander versetzt sind, und dass zur Bildung einer in Sitzquerrichtung verlaufenden Schwenkachse (19) eine (27) der Gelenkstellen in Art eines Kugelgelenkes und die andere Gelenkstelle als eine Schwenk- und Verschiebebewegung ermöglichendes Schlitz/Zapfen-Gelenk (33, 35) ausgebildet sind.

6. Fahrgastsitz nach Anspruch 5, **dadurch gekennzeichnet, dass** die in der Art eines Kugelgelenkes ausgebildete Gelenkstelle (27) zwischen den rückwärtigen Bereichen von Sitzträger (9) und Sitzboden (7) angeordnet ist und sich das Schlitz/Zapfen-Gelenk (33, 35) an einem demgegenüber weiter vorn am Sitzboden (7) befestigten Gelenkträger (37) befindet.

7. Fahrgastsitz nach Anspruch 6, **dadurch gekennzeichnet, dass** der Gelenkträger (37) Arme (39) aufweist, die sich zu beiden Seiten der in Sitzlängsrichtung verlaufenden Schwenkachse (15) quer zu dieser entlang des Sitzbodens (7) erstrecken, und dass zwischen Sitzträger (9) und den Enden der Arme (39) des Gelenkträgers (37) Hydro-Lock-Elemente (41) der Feststelleinrichtung eingesetzt sind, die am Schlitz/Zapfen-Gelenk (33, 35) sowohl eine Verschiebe- als auch eine Schwenkbewegung in Einstellpositionen und die Verriegelung in diesen Einstellpositionen ermöglichen.

8. Fahrgastsitz nach einem der Ansprüche 1 bis 7, **dadurch gekennzeichnet, dass** als Gelenkanordnung ein zwischen Sitzträger (9) und Sitzboden (7) befindliches Kardangelenk (13) vorgesehen ist.

## Claims

1. Vehicle passenger seat, in particular airplane passenger seat, with seat components such as a seat carrier (9), seat part (1), back rest (3) and arm rests (5), whereby the position of at least one seat component can be adjusted relative to the other seat components, and can be fixed in said position by means of a controllable fixing means (41), whereby the seat bottom (7) of the seat part (1) is tiltably positioned relative to the seat carrier (9) around two tilt axis (15, 19) forming an angle with each other, and whereby the seat bottom (7) is connected with the seat carrier (9) via a joint arrangement (13; 27, 33, 35), **characterised in that** the fixing means comprises at least one hydraulic locking element (41) to be controlled by the seat user for selectively locking and releasing the joint movement of the joint arrangement (13; 27, 33, 35).

2. Vehicle passenger seat according to Claim 1, **characterised in that** the tilt axis (15, 19) each extend vertically in relation to each other.

3. Vehicle passenger seat according to Claim 2, **characterised in that** one tilt axis (15) extends in a longitudinal seat direction, and one tilt axis (19) in a transverse seat direction.

4. Vehicle passenger seat according to Claim 3, **characterised in that** the tilt axis (19) extending in a transverse seat direction is parallel with the axis of the seat carrier (9), the same extending in a horizontal direction in relation to the installation position of the seat.

5. Vehicle passenger seat according to one of the Claims 1 to 4, **characterised in that** the joint arrangement comprises two joints (27, 33, 35) located between the seat bottom (7) and the seat carrier (9), offset from each other in a longitudinal seat direction for fixing the tilt axis (15) extending in the said longitudinal seat direction, and **in that** one (27) of the joints takes the form of a ball joint for forming a tilt axis (19) extending in a transverse seat direction, and the other joint takes the form of a slot/spigot joint (33, 35) enabling a tilt and displacement movement.

6. Vehicle passenger seat according to Claim 5, **characterised in that** the joint (27) taking the form of a ball joint is located between the rear areas of the seat carrier (9) and the seat bottom (7), and **in that** the slot/spigot joint (33, 35) is located in a joint bearing (37) fitted further to the front of the seat bottom (7).

7. Vehicle passenger seat according to Claim 6, **characterised in that** the joint carrier (37) comprises arms (39) at both sides of the tilt axis (15) extending in a longitudinal seat direction transverse to the same along the seat bottom (7), and **in that** hydraulic locking elements (41) of the fixing means are inserted between the seat carrier (9) and the ends of the arms (39) of the joint carrier (37), enabling a displacement as well as a tilt movement into adjustment positions at the slot-spigot joint (33, 35), and a locking in these adjustment positions.

8. Vehicle passenger seat according to Claims 1 to 7, **characterised in that** a transmission joint (13) is envisaged between the seat carrier (9) and the seat bottom (7) as the joint arrangement.

## Revendications

1. Siège pour passager, en particulier pour un avion, ayant des composants tels qu'un support d'assise (9), une assise (1), un dossier (3) et des accotoirs (5), dont au moins un composant est réglable en position par rapport à d'autres composants pour être amené dans des positions sélectionnables et peut être fixé dans ces positions au moyen d'un dispositif de blocage (41) pouvant être commandé, le fond (7) de l'assise (1) étant monté pivotant par rapport au support d'assise (9), autour de deux axes de pivotement (15, 19) faisant entre eux un angle, et le fond (7) étant relié au support d'assise (9) par le biais d'un système d'articulation (13 ; 27, 33, 35), **caractérisé en ce que** le dispositif de blocage a au moins un élément hydro-lock (41) pouvant être commandé par l'utilisateur du siège en vue d'un blocage et d'un déclenchement au choix de la mobilité en articulation du système d'articulation (13 ; 27, 33, 35).

2. Siège pour passager selon la revendication 1, **caractérisé en ce que** les axes de pivotement (15, 19) s'étendent perpendiculairement l'un par rapport à l'autre.

3. Siège pour passager selon la revendication 2, **caractérisé en ce qu'**un axe de pivotement (15) s'étend dans la direction longitudinale du siège et un axe de pivotement (19) s'étend dans la direction transversale du siège.

4. Siège pour passager selon la revendication 3, **caractérisé en ce que** l'axe de pivotement (19) s'étendant dans la direction transversale du siège est parallèle à l'axe du support d'assise (9) qui s'étend dans la direction horizontale, relativement à la position de montage du siège.

5. Siège pour passager selon l'une des revendications 1 à 4, **caractérisé en ce que** le système d'articulation a deux points d'articulation (27, 33, 35) se trouvant entre le fond d'assise (7) et le support d'assise (9), points d'articulation qui sont décalés l'un par rapport à l'autre dans la direction longitudinale du siège pour la détermination d'un axe de pivotement (15) s'étendant dans la direction longitudinale du siège, et **en ce que** pour former un axe de pivotement (19) s'étendant dans la direction transversale du siège, l'un (27) des points d'articulation est réalisé à la manière d'une articulation sphérique et l'autre point d'articulation est réalisé sous la forme d'une échancrure/articulation à pivot (33, 35) permettant un mouvement de pivotement et de coulissement.

6. Siège pour passager selon la revendication 5, **caractérisé en ce que** le point d'articulation (27), réalisé à la manière d'une articulation sphérique, est disposé entre les zones arrière du support d'assise (9) et le fond d'assise (7), et l'échancrure/articulation à pivot (33, 35) se situe au niveau d'un support d'articulation (37), lequel, en revanche, est fixé plus à l'avant du fond d'assise (7).

7. Siège pour passager selon la revendication 6, **caractérisé en ce que** le support d'articulation (37) a des bras (39) qui s'étendent des deux côtés de l'axe de pivotement (15) s'étendant dans la direction longitudinale du siège, transversalement par rapport à cet axe de pivotement, le long du fond d'assise (7), et **en ce qu'**entre le support d'assise (9) et les extrémités des bras (39) du support d'articulation (37) sont installés des éléments hydro-lock (41) du dispositif de blocage, éléments qui permettent aussi bien un mouvement de coulissement que de pivotement au niveau de l'échancrure/articulation à pivot (33, 35) dans des positions de réglage et le verrouillage dans ces positions de réglage.

8. Siège pour passager selon l'une des revendications 1 à 7, **caractérisé en ce qu'**un joint de cardan (13) se trouvant entre le support d'assise (9) et le fond d'assise (7) est prévu en tant que système d'articulation.
